Europäisches Patentamt

European Patent Office

Office européen des brevets

(19)

(11) Publication number: **0 163 676**

**B1**

(12) **EUROPEAN PATENT SPECIFICATION**

(45) Date of publication of patent specification: **18.10.89**

(51) Int. Cl.⁴: **A 61 C 19/00**

(21) Application number: **84904111.6**

(22) Date of filing: **12.11.84**

(86) International application number:
**PCT/DK84/00105**

(87) International publication number:
**WO 85/02108 23.05.85 Gazette 85/12**

(54) HOLDER FOR CYLINDRICAL OBJECTS SUCH AS DENTAL INSTRUMENTS.

(30) Priority: **11.11.83 DK 5175/83**

(43) Date of publication of application:
**11.12.85 Bulletin 85/50**

(45) Publication of the grant of the patent:
**18.10.89 Bulletin 89/42**

(84) Designated Contracting States:
**DE FR**

(56) References cited:
**DE-A-3 116 206**
**US-A-2 516 965**

**Industrial Fasteners Handbook, p. 440**
**Mechanisms, Linkages and Mechanical**
**Controls, McGraw-Hill, pp. 150,151,159**

(73) Proprietor: **GOOF, Sven Karl Lennart**
**236A, Gl. Strandvej**
**DK-3050 Humlebaek (DK)**

(72) Inventor: **GOOF, Sven Karl Lennart**
**236A, Gl. Strandvej**
**DK-3050 Humlebaek (DK)**

(74) Representative: **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried**
**Jackermeier**
**Widenmayerstrasse 23 D-8000 München 22 (DE)**

EP 0 163 676 B1

Courier Press, Leamington Spa, England.

## Description

The present invention relates to a holder for objects having a generally circular-cylindrical surface and otherwise being of the type defined in the opening clause of claim 1.

For instance in dental clinics it is usual to support or suspend several instruments side by side in a well arranged and easily accessible array or grouping, and various holders are known in the art for that purpose. However, certain known holders are insufficient with respect to preventing the supply lines or cables of the instruments from getting into disorder, while other known holders are so designed that it is necessary for the dentist to look at the holder when an instrument is to be placed therein after use. German Patent No. 3,116,206 dicloses examples of holders for dental instruments.

The prior art also includes holders of similar types which, however, are adapted to directly clamp an object such as a test tube, the object being inserted into a groove-shaped portion and being clamped therein by means of a spring loaded member which continuously presses directly on the object and thereby retains the object in the groove-shaped portion. U.S. Patent No. 2,516,965 discloses an example of such a clamping holder. A similar holder structure would not be useful or suitable for dental instruments, a.o. because it would be necessary to operate a particular release member in order to remove an instrument from the holder.

The holder of the present invention is characterized by the features defined in the characterizing clause of claim 1. A cylindrical object can be placed in the holder just by inserting the object laterally into the groove. Thus, on its way down through the entrance portion of the groove, the object will engage the slanting engagement surface on the latching edge portion of the locking member, and by applying a sufficient force to the object the latching edge will yield back and allow the object to pass due to interaction between the inclined engagement surface and the round surface of the object. When the object has been moved into the bottom portion of the groove, the latching edge portion reassumes its protruding position behind the object which thereby is retained in the bottom portion of the groove. The cylindrical object is not clamped in the groove and is axially movable therein.

However, the latching edge portion of the locking member will prevent that the object be laterally removed from the groove.

The holder is, accordingly, very useful e.g. for mounting pipes or cables. Moreover, the holder is very useful for dental instruments or other instruments having a cylindrical handle portion at the end of a supply cable. Such an instrument can easily be pulled axially out from the holder, whereby the grove also will serve as a guide or fixation for the supply cable of the removed instrument. It is also very easy and convenient to place the instrument back into the holder, in particular if the supply cable is automatically pulled back towards the holder as it is usual in connection with instruments of the type in question.

The invention will now be described in further detail with reference to the drawing in which,

Figure 1 is an end view showing an embodiment of the holder of the invention with an object being inserted therein, and

Figure 2 shows a cross-section through the holder of Figure 1 but with the object fully inserted in place therein.

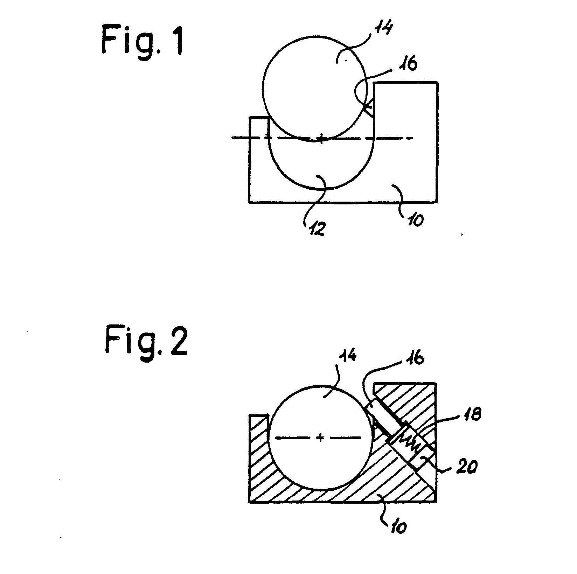

Reference is now made to Figure 1 of the drawing which shows a holder in accordance with the invention seen from one end thereof. In a base portion 10, there is provided a through-going groove 12 for inserting and receiving a cylindrical object 14. The groove 12 includes an entrance portion which is above the level indicated by a dotted line in Figure 1. In this entrance portion, the side walls of the groove are generally parallel to each other and their spacing is at least equal to the diameter of the objects 14.

The entrance portion may also include appropriately inclined side wall portions which are designed or shaped to catch and guide the object during its insertion.

At the level or plane indicated by the dotted line, the entrance portion of the groove merges into a bottom portion having a depth which is substantially equal to the radius of the object 14. In the embodiment shown, the bottom portion of the groove is shaped with a semi-circular cross-section in order to match with the periphery of the object. However, the bottom portion could as well have a flat bottom and appropriately inclined or stepped sidewalls.

Figure 1 shows the object 14 positioned for insertion into the holder. If the object 14 is an instrument, the operator shall have to place the instrument in the position shown in Figure 1, and in this connection it is almost unimportant which part of the surface of the instrument hits the holder. After the object or instrument 14 has been positioned as shown in Figure 1, it is only necessary to apply a slight pressure force on the object towards the bottom of the groove 12, whereby a spring loaded locking member 16 yields back so that the object 14 is able to slide in place in the groove 12.

Hereafter, the object 14 assumes the position shown in Figure 2, wherein the locking member 16 has been pushed out again and thereby blocks the object 14 in position.

In another embodiment (not shown), a locking member corresponding to the member 16, can be provided in each of the side walls of the entrance portion of the groove.

As shown in Figure 2, the locking member 16 can be a cylindrical pin having a stop collar for engagement with a corresponding interior shoulder in an inclined bore in the base portion 10. A spring 18 acts between the inner end of the locking pin and a plug 20 which is threaded, glued or otherwise secured into the bore.

A similar latching or locking effect can be obtained with other designs for the locking member and with other inclinations for the locking pin 16 shown in Figure 2. However, it is essential that the locking member has or includes a latching edge portion which normally protrudes into the entrance portion of the groove 12. Moreover, it is essential that the latching edge has or includes an inclined surface for engagement with the round surface of the object 14 in situations as that shown in Figure 1. In Figure 1, the inclined engagement surface is defined by the end surface of the locking pin 16.

The latching edge portion should protrude from a side wall or face of the entrance portion of the groove 12, i.e. in the area or space above the level indicated by a dotted line in Figure 1. Some spacing or distance above that level provides a better latching or locking effect.

As an alternative to the locking pin 16, the locking member can be designed as a resilient, circular ring or sleeve member which has been split to define an opening in the wall thereof for lateral insertion of the object into the interior of the sleeve member. The sleeve member is recessed or retained in the walls of the groove 12 with the insertion opening of the sleeve being directed for receiving the object 14. The sleeve member should have an inner diameter which is at least equal to the outer diameter of the object, and the distance between the two opposed edges, which define the insertion opening therebetween, should be less than the outer diameter of the object so that the two edges, each of which defines a latching edge portion, will be resiliently urged away from each other when the object is pressed through the insertion opening and into the interior of the locking sleeve member. Accordingly, the sleeve member will operate similarly to the two opposed spring-loaded locking pins corresponding to pin 16 in Figures 1 and 2.

A cable or a pipe which has been mounted by means of holders in accordance with the invention, can be removed by urging the locking member 16 back into its associated recess or bore in the base portion 10 by means of an appropriately pointed tool such as a screw driver. However, an instrument such as a dental instrument can be axially removed from the holder and thereby the supply cable of the instrument will be pulled into the groove 12 which guides and fixes the cable.

The base portion 10 may define or include several grooves arranged side by side, and the base portion may include means for mounting the holder on a support structure. The length of the groove 12, e.i. of the base portion 10, may be selected or adapted to the object or instrument contemplated. Typically, however, the length of the base portion will be of the same order as its width.

## Claims

1. A holder for objects having a generally cylindrical surface, in particular dental instruments, said holder comprising a base portion (10) having opposite end faces and defining at least one groove or gutter-shaped channel (12) extending therethrough from one end face to the other, said groove or channel (12) having an entrance portion with opposed side walls spaced apart a distance greater than the cross section dimension of the object (14) intended to be received therein, and said groove or channel (12) having a bottom portion merging smoothly with said entrance portion,

characterized

in that at least one of said side walls is provided with a recess communicating with said entrance portion,

in that a locking member (16) is movable in said recess in a plane essentially perpendicular to the axis of the channel (12), and is resiliently biased towards a first position in which at least a latching edge portion of said locking member protrudes from said recess and into said entrance portion, and

in that said latching edge portion includes a first surface exposed for sliding engagement with the surface of the object (14) being laterally inserted into said channel (12), whereby said locking member (16) is urged back into a second position in said recess by said object and reassumes said first position when said object has been inserted, and

said latching edge portion further including a second surface exposed for stopping engagement with the surface of the inserted object (14) so as to retain the object in the holder in the lateral direction and to allow the removal of the object in the axial direction of the channel (12).

2. A holder as defined in claim 1, characterized in that said locking member is a pin (16) which is axially slidable in a bore constituting that recess in said side wall.

3. A holder as defined in claim 1, characterized in that said locking member is a resilient ring or sleeve member, said member being split to define an opening in the wall thereof for lateral insertion of said object into the interior of said sleeve member, and said sleeve member being retained in said recess with said insertion opening directed for receiving said object being laterally inserted into said channel, and in that two opposed edges which define said insertion opening therebetween, define respective latching edge portions.

## Patentansprüche

1. Halter für zylindrische Gegenstände, insbesondere zahnärztliche Instrumente, welcher Halter ein Sockelteil (10) mit voneinander abgewandten Stirnseiten besitzt und mindestens eine Nut oder einen rinnenförmgien Kanal (12) umgrenzt, die/der sich durch das Sockelteil von einer Stirnseite zur anderen erstreckt und einen Eintrittsabschnitt mit gegenüberstehenden Seitenwänden aufweist, deren Abstand voneinander größer ist als das Querschnittsmaß des von dem Kanal aufzunehmenden Gegenstands (14), und welche Nut oder welcher rinnenförmige Kanal (12) einen Bodenteil aufweist, der stetig in den genannten Eintrittsabschnitt übergeht,

dadurch gekennzeichnet,

daß mindestens eine der genannten Seitenwände mit einer Vertiefung versehen ist, die mit dem genannten Eintrittsabschnitt in Verbindung steht,

daß ein Sperrglied (16) in dieser Vertiefung in einer im wesentlichen senkrecht auf der Achse des Kanals (12) stehenden Ebene bewegbar ist und federnd in eine erste Stellung gedrückt wind, in welcher das genannte. Sperrglied wenigstens mit einer Verriegelungskante aus der genannten Vertiefung vorsteht und in den genannten Eintrittsabschnitt hineinragt, und

daß die genannte Verriegelungskante eine erste Fläche aufweist, die so gerichtet ist, daß sie über die Fläche des Gegenstands (14), der seitwärts in den genannten Kanal (12) eingeführt wird, gleiten kann, wodurch das genannte Sperrglied (16) durch den genannten Gegenstand in eine zweite Stellung in der Vertiefung zurückgedrückt wird und die genannte erste Stellung wieder einnimmt, wenn der Gegenstand eingeführt ist,

daß die genannte Verriegelungskante außerdem eine zweite Fläche aufweist, die so gerichtet ist, daß sie die Berührung mit der Fläche des eingeführten Gegenstands (14) beendet, so daß der Gegenstand in dem Halter in Seitwärtsrichtung gesichert wird und der Gegenstand in axialer Richtung des Kanals (12) entnommen werden kann.

2. Halter nach Anspruch 1, dadurch gekennzeichnet, daß das genannte Sperrglied als Stift (16) ausgebildet ist, der in einer Bohrung gleitend axial verschiebbar ist, die diese Vertiefung in der genannten Seitenwand bildet.

3. Halter nach Anspruch 1, dadurch gekennzeichnet, daß das Sperrglied als federndes Ringelement oder Hülsenelement ausgebildet ist, welches Glied geschlitzt ist, um eine Öffnung in seiner Wand abzugrenzen, damit der genannte Gegenstand seitwärts in das Innere des genannten Hülsenelements eingeführt werden kann, und welches genannte Hülsenelement in der genannten Vertiefung gehalten wird, wobei die genannte Einführungsöffnung so gerichtet ist, daß der Gegenstand seitwärts in den genannten Kanal eingeführt wird, und daß zwei einander gegenüberliegende Kanten, die zwischen sich die genannte Einführungsöffnung abgrenzen, jeweils Verriegelungskanten bilden.

**Revendications**

1. Support pour des objets ayant une surface généralement cylindrique, notamment des instruments dentaires, ledit support comportant une partie de base (10) ayant des faces terminales opposées et définissant au moins une rainure ou un canal à la manière d'une rigole (12) qui s'étend à travers la base, d'une face terminale à l'autre, ladite rainure ou ledit canal (12) ayant une partie d'entrée avec des parois latérales opposées, espacées d'une distance supérieure à la dimension de la section transverale de l'objet (14) qui doit être reçu dans la rainure ou le canal, ladite rainure ou le canal (12) possédant une partie de fond fusionnant doucement avec ladite partie d'entrée,

caractérisé

en ce qu'au moins une des parois latêrales est pourvue d'un enfoncement communiquant avec ladite partie d'entrée,

qu'un êlément de verrouillage (16) peut être déplacé dans ledit enfoncement dans un plan essentiellement perpendiculaire à l'axe du canal (12) et est pressé de manière résiliente dans une première position dans laquelle une partie formant une arête de verrouillage dudit élément de verrouillage sont dudit enfoncement et s'étend dans la partie d'entrée, et

en ce que ladite arête de verrouillage comporte une première surface exposée pour l'engagement glissant avec une surface de l'objet (14) qui est inséré latéralement dans ledit canal (12), ledit élément de verrouillage (16) étant pressé en arrière dans une seconde position dans ledit enfoncement par ledit objet et reprend ladite première position lorsque l'objet a été inséré, et que l'arête de verrouillage comporte, par ailleurs, une seconde surface exposée pour l'engagement bloquant avec la surface de l'objet inséré (14) de manière à maintenir l'objet dans le support en direction latérale et à permettre le retrait de l'objet en direction axiale du canal (12).

2. Support selon la revendication 1, caractérisé en ce que ledit élément de verrouillage est une pointe (16) qui peut glisser axialement dans un perçage constituant l'enfoncement dans ladite paroi latérale.

3. Support selon la revendication 1, caractérisé en ce que l'élément de verrouillage est un anneau résilient ou élément en forme de douille, ledit élément étant fendu pour définir une ouverture dans la paroi pour l'insertion latérale dudit objet à l'intérieur dudit élément en forme de douille, et que l'élément en forme de douille est retenu dans ledit enfoncement avec l'ouverture d'insertion dirigée de manière à pouvoir recevoir ledit objet qui est latéralement inséré dans le canal et que deux arêtes opposées qui déterminent ladite ouverture d'insertion entre elles définissent des arêtes de verrouillage respectives.

Fig. 1

Fig. 2